# EUROPÄISCHE PATENTSCHRIFT

(11) **EP 3 022 239 B1**
(45) Veröffentlichungstag und Bekanntmachung des Hinweises auf die Patenterteilung: **05.04.2017**
(21) Anmeldenummer: 14735971.5
(22) Anmeldetag: 07.07.2014
(51) Int. Cl.: C08F 10/10, C08F 2/00, C08F 110/10

(54) **HOCHREAKTIVES POLYISOBUTYLEN MIT EINEM HOHEN GEHALT AN VINYLIDEN-DOPPELBINDUNGEN IN DEN SEITENKETTEN**
HIGHLY REACTIVE POLYISOBUTYLENE HAVING A HIGH PERCENTAGE OF VINYLIDENE DOUBLE BONDS IN THE SIDE CHAINS
POLYISOBUTYLÈNE À RÉACTIVITÉ ÉLEVÉE ET À HAUTE TENEUR EN DOUBLES LIAISONS VINYLIDÈNE DANS LES CHAÎNES LATÉRALES

(30) Priorität: 17.07.2013 EP 13176789
(43) Veröffentlichungstag der Anmeldung: 25.05.2016
(73) Patentinhaber: BASF SE, 67056 Ludwigshafen am Rhein (DE)
(72) Erfinder: WETTLING, Thomas, 67117 Limburgerhof (DE); HIRSCH, Stefan, 67435 Neustadt (DE); BRYM, Markus, 67117 Limburgerhof (DE); WEIS, Markus, 67069 Ludwigshafen (DE)
(74) Vertreter: BASF IP Association
(86) Internationale Anmeldenummer: PCT/EP2014/064402
(87) Internationale Veröffentlichungsnummer: WO 2015/007553

(56) Entgegenhaltungen:
- WO-A1-99/31151
- US-A- 4 152 499

## Beschreibung

Die vorliegende Erfindung betrifft ein neues hochreaktives Polyisobutylen mit einem hohen Gehalt an Vinyliden-Doppelbindungen in den Seitenketten. Weiterhin betrifft die vorliegende Erfindung ein Verfahren zur Herstellung eines solchen Polyisobutylens, seine Verwendung zur Herstellung von als Kraft- und Schmierstoffadditiven geeigneten Derivaten sowie ein Verfahren zur Herstellung solcher Derivate.

Unter hochreaktiven Polyisobutylenen versteht man im Unterschied zu den sogenannten niedrigreaktiven Polymeren solche Polyisobutylene, die einen hohen Gehalt, d.h. von mehr als 50 Mol-%, an vorzugsweise terminal angeordneten ethylenischen Vinyliden-Doppelbindungen enthalten, und zwar in der Praxis meist von wenigstens 60 Mol-%, insbesondere von wenigstens 70 Mol-%, vor allem von wenigstens 80 Mol-%.

Unter Vinyliden-Doppelbindungen werden im Sinne der vorliegenden Anmeldung mono- oder disubstituierte Doppelbindungen der Formel >C=CH₂ verstanden, in der eine der beiden freien Valenzen des linken Kohlenstoffatoms direkt oder über eine niedermolekulare Alkylen- oder Alkenylengruppe an die Polymerhauptkette und die andere an einen niedermolekularen Kohlenwasserstoffrest, zum Beispiel eine Methylgruppe [resultierend: -C(CH₃)=CH₂], oder an ein Wasserstoffatom [resultierend: -CH=CH₂] gebunden ist. Die Anbindung der Vinyliden-Doppelbindung kann an einem Ende der Polymerhauptkette oder in deren Verlauf weiter innen erfolgen - im ersten Fall liegt eine terminale Vinyliden-Doppelbindung ("α-Doppelbindung") vor, welche den überwiegende Anteil der Vinyliden-Doppelbindungen im Molekül ausmacht, im zweiten Fall befindet sich die Vinyliden-Doppelbindung an einer Seitenkette (vorausgesetzt, diese Seitenkette bildet nicht mit dem Rest des Polymerrückgrates die längste Kette im Molekül).

Die Vinyliden-Doppelbindungen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt. Solche hochreaktive Polyisobutylene werden unter anderem als Zwischenprodukte zur Herstellung von Additiven für Schmier- und Kraftstoffe verwendet, wie dies zum Beispiel in der DE-A 27 02 604 beschrieben wird.

Derartige hochreaktive Polyisobutylene sind beispielsweise nach dem Verfahren der Patentschrift DE-A 27 02 604 C2 (1) durch kationische Polymerisation von Isobuten in flüssiger Phase in Gegenwart von reinem Bortrifluorid als Katalysator erhältlich. Polyisobutylene mit einem ähnlich hohen Anteil an endständigen Vinyliden-Doppelbindungen und mit einer engeren Molekulargewichtsverteilung, sind dadurch erhältlich, dass die Polymerisation in Gegenwart eines mit bestimmten sauerstoffhaltigen organischen Verbindungen wie Alkoholen oder Ethern oder Mischungen solcher Verbindungen desaktivierten Bortrifluorid-Katalysators erfolgt, wie beispielsweise in der WO 93/10063 oder in der EP-A 0 628 575 beschrieben.

Stellt man aus den aus dem Stand der Technik bekannten hochreaktiven Polyisobutylenen übliche Derivate her, die als Kraft- oder Schmierstoffadditive dienen sollen, stellt man häufig fest, dass die Performanceeigenschaften solcher Derivate verbesserungsbedürftig sind. Aufgabe der vorliegenden Erfindung war es daher, ein hochreaktives Polyisobutylen bereitzustellen, aus dem sich Derivate herstellen lassen, die gegenüber den erstgenannten Derivaten verbesserte Performanceeigenschaften aufweist, insbesondere eine verbesserten Reinigungs- und Reinhaltungswirkung bei Einlassventilen und Einspritzdüsen in Ottomotoren.

Demgemäß wurde ein Polyisobutylen mit einem Gesamtgehalt an Vinyliden-Doppelbindungen von mehr als 50 Mol-%, vorzugsweise von mehr als 60 Mol-%, insbesondere von mehr als 70 Mol-%, vor allem von mehr als 80 Mol-%, und einem zahlengemittelten Molekulargewicht (Mₙ) von 500 bis 10.000 Dalton, vorzugsweise von 650 bis 5.000 Dalton, insbesondere von 750 bis 3.500 Dalton, vor allem von 900 bis 2.500 Dalton, wobei mindestens 10%, vorzugsweise mindenstens 11%, insbesondere mindestens 12%, vor allem 12 bis 15%, aller Vinyliden-Doppelbindungen des Polyisobutylens Bestandteil einer oder mehrerer Seitenketten aus mindestens 2 Kohlenstoffatomen zur Polyisobutylen-Hauptkette sind, gefunden.

In einer bevorzugten Ausführungsform weist dieses Polyisobutylen gleichzeitig einen Gesamtgehalt an Vinyliden-Doppelbindungen von mehr als 70 Mol-% und ein zahlengemitteltes Molekulargewicht (Mₙ) von 900 bis 2.500 Dalton auf, wobei mindestens 10% aller Vinyliden-Doppelbindungen des Polyisobutylens Bestandteil einer oder mehrerer Seitenketten aus mindestens 2 Kohlenstoffatomen zur Polyisobutylen-Hauptkette sind.

Als Polyisobutylen-Hauptkette ist die längste Kohlenstoffkette im Molekül anzusehen. Eine am Ende dieser Polyisobutylen-Hauptkette angeordnete Vinyliden-Doppelbindung ("α-Doppelbindung", d.h. α-ständig in Bezug auf die Hauptkette) macht den größeren Anteil der Vinyliden-Doppelbindungen im Molekül aus. Diese Polyisobutylen-Hauptkette trägt neben den aus dem sukzessiven Einbau der Isobuten-Monomereinheiten stammenden und sich regelmäßig wiederholenden Methylseitenketten eine Mindestanzahl von Seitenketten aus mindestens 2, insbesondere aus mindestens 3, vor allem aus mindestens 4 Kohlenstoffatomen, welche weitere Vinyliden-Doppelbindungen enthalten. In der Regel enthält jede dieser Seitenketten eine Vinyliden-Doppelbindung. Da diese Seitenkette vermutlich hauptsächlich durch den Einbau von monomerem Isobuten und/oder niederen Isobutenoligomeren (meist aus bis zu 5 Isobuten-Einheiten) an nicht-endständige Positionen in der wachsenden Polyisobutylen-Hauptkette gebildet werden, weisen sie üblicherweise in der Mehrzahl 4, 8, 12, 16 oder 20 Kohlenstoffatom auf. Neben dem Einbau von Isobuten bzw. Isobutenoligomeren ist jedoch auch eine Bildung solcher Seitenketten durch den Einbau von 1,3-Butadien- und/oder von 1-Buten-Einheiten, welche üblicherweise im eingesetzten Isobuten in kleineren Mengen als Verunreinigungen oder bei Verwendung technischer C₄-Kohlenwasserstoffströme als Einsatzstrombestandteile vorhanden sind, oder durch Umlagerungsreaktionen im wachsenden Polymermolekül denkbar, wobei die gebildeten Seitenketten dann auch eine Kohlenstoffatomanzahl haben können, die von den oben genannten Werten 4, 8, 12, 16 und 20 abweicht.

Die aus dem Stand der Technik bekannten hochreaktiven Polyisobutylene weisen oft auch schon geringe Gehalte an solchen Vinyliden-Doppelbindungen tragenden Seitenketten auf, deren Anteil liegt allerdings unter 8%, meist bei ca. 2 bis ca. 7,5, jeweils bezogen auf den Gesamtgehalt an Vinyliden-Doppelbindung im Molekül. Jedoch sind die Performanceeigenschaft der aus diesen Polyisobutylenen hergestellten Kraft- und Schmierstoffadditiv-Derivate verbesserungsbedürftig. Das erfindungsgemäß höhere Verhältnis von Vinyliden-Doppelbindungen in den Seitenketten zu terminalen Vinyliden-Doppelbindungen in der Hauptkette ist für die überraschend besseren Performanceeigenschaft der aus dem erfindungsgemäßen Polyisobutylen hergestellten Kraft- und Schmierstoffadditiv-Derivate verantwortlich. Verbunden mit dem höheren Gehalt an Vinyliden-Doppelbindungen in den Seitenketten ist ein höherer Verzweigungsgrad des Gesamtmoleküls in Bezug auf längerkettige Seitenketten.

In einer bevorzugten Ausführungsform sind beim erfindungsgemäßen Polyisobutylen die Vinyliden-Doppelbindungen, die Bestandteil einer oder mehrerer Seitenketten aus mindestens 2, insbesondere aus mindestens 3, vor allem aus mindestens 4, besondere bevorzugt aus in der Mehrzahl 4, 8, 12, 16 oder 20 Kohlenstoffatomen zur Polyisobutylen-Hauptkette sind, jeweils in α-Stellung (in Bezug auf die Seitenkette) an den distalen Ende der Seitenketten angeordnet, d.h. sie sitzen ganz außen an der Seitenkette und weisen überwiegend - analog zur Struktur der terminalen Vinyliden-Doppelbindungen an der Polyisobutylen-Hauptkette - die besonderes reaktive Struktur -C(CH₃)=CH₂ auf.

Das erfindungsgemäße hochreaktive Polyisobutylen weist neben den genannten Vinyliden-Doppelbindungen am Ende der Hauptkette und in den Seitenketten auch einen kleineren Anteil an höhersubstituierten (d.h. tri- und tetrasubstituierten) weiter innenständigen ethylenischen Doppelbindungen auf, welche naturgemäß bei nachfolgenden Derivatisierungsreaktionen weniger reaktiv sind. Ihr Gehalt sollte daher möglichst im Vergleich zu den Vinyliden-Doppelbindungen möglichst gering sein. Der Gehalt an β-ständigen trisubstituierten Doppelbindungen liegt im erfindungsgemäßen Polyisobutylen in der Regel bei 5 bis 45 Mol-%, insbesondere bei 8 bis 35 Mol-%, vor allem bei 12 bis 25 Mol-%, der Gehalt an tetrasubstituierten, meist γ-ständigen Doppelbindungen liegt im erfindungsgemäßen Polyisobutylen in der Regel bei 1 bis 10 Mol-%, insbesondere bei 2 bis 8 Mol-%, vor allem bei 3 bis 6 Mol-%, jeweils bezogen auf den Gesamtgehalt aller olefinischen Doppelbindungen im Molekül. Die Summe der Gehalte an Vinyliden-Doppelbindungen am Ende der Hauptkette und in den Seitenketten, an β-ständigen trisubstituierten Doppelbindungen und an tetrasubstituierten, meist γ-ständigen Doppelbindungen beträgt in allen Fällen 100 Mol-%.

Die Gehalte an Vinyliden-Doppelbindungen am Ende der Hauptkette und in den Seitenketten sowie auch die Gehalte an tri- und tetrasubstituierten Doppelbindungen im erfindungsgemäßen Polyisobutylen werden üblicherweise mittels ¹H-NMR-Spektroskopie bestimmt.

Das erfindungsgemäße Polyisobutylen hat ein zahlengemitteltes Molekulargewicht (Mₙ) von 500 bis 10.000 Dalton, vorzugsweise 650 bis 5.000 Dalton, insbesondere 750 bis 3.500 Dalton, vor allem 900 bis 2.500 Dalton, jeweils gemessen durch Gelpermeationschromatographie (GPC). Die Polydispersizität beträgt typischerweise weniger als 2,5, vorzugsweise 2,0 oder weniger und insbesondere 1,05 bis 2,0. Die Polydispersität ist ein Maß für die Molekulargewichtsverteilung der erhaltenen Polymerketten und entspricht dem Quotient aus gewichtsmittlerem Molekulargewicht M_{w} und zahlenmittlerem Molekulargewicht Mₙ (PDI = M_{w}/Mₙ).

Gegenstand der vorliegenden Erfindung ist auch ein Verfahren zur Herstellung des erfindungsgemäßen Polyisobutylens, welches dadurch gekennzeichnet ist, dass man in einer Polymerisationsapparatur Isobuten oder ein Isobuten-haltiges C₄-Kohlenwasserstoff-Gemisch in Gegenwart einer Mischung aus im wesentlichen Isobutenoligomeren aus 2 bis 5 Isobuten-Einheiten bei Temperaturen von -100°C bis +100°C mittels eines Brönsted-Säure-basierten oder Lewis-Säure-basierten Polymerisationskatalysators polymerisiert, wobei das Mol-Verhältnis der in der im Polymerisationsmedium vorliegenden Isobutenoligomeren-Mischung enthaltenen Vinyliden-Doppelbindungen zu den Doppelbindungen des eingesetzten Isobuten-Monomers mindestens 1 : 100, vorzugsweise 1,2 : 100, insbesondere 1,2 : 100 bis 2,5 : 100 beträgt.

Die im Polymerisationsmedium vorliegende Isobutenoligomeren-Mischung besteht zumeist aus Oligomeren mit 2 bis 5 Isobuten-Einheiten sowie geringen Mengen an Rest-Isobuten und höheren Oligomeren mit 6 oder mehr Isobuten-Einheiten. Die Oligomere mit 2 bis 5 Isobuten-Einheiten machen in der Regel mindestens 60 Gew.-%, insbesondere mindestens 75 Gew,-%, vor allem mindestens 90 Gew.-% der Isobutenoligomeren-Mischung aus. Die Isobutenoligomeren-Mischung weist normalerweise eine Verteilung der einzelnen Oligomeren-Species auf, bei der die Oligomere mit 3 und 4 Isobuten-Einheiten am stärksten vertreten sind. Auch isoliert vorliegende einzelne Isobutenoligomere können die Bildung des erfindungsgemäßen Polyisobutylens bewirken.

Die Isobutenoligomeren-Mischung kann durch geeignete Maßnahmen in situ in Polymerisationsmedium erzeugt werden. In einer bevorzugten Ausführungsform stellt man das erfindungsgemäße Polyisobutylen dadurch her, dass man die aus im wesentlichen Isobutenoligomeren aus 2 bis 5 Isobuten-Einheiten bestehende Mischung separat herstellt und vor oder während der Polymerisation des Isobutens oder des Isobuten-haltigen C₄-Kohlenwasserstoff-Gemisches in das Polymerisationsmedium einführt.

Die Polymerisation des Isobutens selbst kann im Prinzip in der für den Fachmann üblichen und bekannten Art und Weise durchgeführt werden.

Als Polymersationskatalysator für Isobuten wird ein homogener oder heterogener Katalysator aus der Klasse der Brönsted- oder Lewis-Säuren eingesetzt. Insbesondere handelt es sich bei diesem Katalysator um Bortrifluorid oder Bortrifluorid-Komplexe wie Bortrifluorid-Etheraten, z. B. Bortrifluorid-Diethyletherat, oder Bortrifluorid-Alkohol-Komplexe, z. B. mit Methanol, Ethanol, Isopropanol oder sec.-Butanol. Auch Zinntetrachlorid, entweder allein oder zusammen mit Mineralsäuren oder Alkylhalogeniden wie tert.-Butylchlorid als Co-Katalysatoren, sowie wasserfreies Aluminiumchlorid können als Polymerisationskatalysatoren verwendet werden.

Als Polymerisationskatalysator für Isobuten können weiterhin auch Komplexe von Aluminiumtrihalogeniden wie Aluminiumtrichlorid oder Aluminiumalkylhalogeniden oder von Eisenhalogeniden wie Eisen(III)-chlorid mit Donoren wie Carbonsäurealkylestern oder insbesondere Dialkylethern wie Dibutylether, gegebenenfalls in Gegenwart eines Initiators wie eines Alkohols, eines Phenols oder Wasser, verwendet werden. Auch hat sich als Polymerisationskatalysator für Isobuten der Komplex aus einer Lewis-Säure wie Aluminiumtrichlorid oder Eisen(III)-chlorid und einem Donor wie Dibutylether in Gegenwart einer organischen Sulfonsäure wie Methansulfonsäure als Initiator bewährt.

Der Polymerisationskatalysator wird in der Regel in Mengen von 0,001 bis 10 Gew.-%, insbesondere 0,01 bis 1 Gew.-%, jeweils bezogen auf die Menge an eingesetztem Isobuten, verwendet.

Die Isobuten-Polymerisation wird üblicherweise bei Temperaturen von -100 bis +100°C, insbesondere von -50 bis +25°C, vor allem von -35 bis +5°C durchgeführt. Man arbeitet zweckmäßigerweise bei einem Druck von 10 bis 5000 kPa.

Das zur Polymerisation verwendete Isobuten kann im Prinzip als Rein-Isobuten eingesetzt werden. Vorteilhafter ist jedoch die Herstellung des erfindungsgemäßen Polyisobutylens aus technischen C₄-Kohlenwasserstoffströmen durch gezielte Polymerisation des darin enthaltenen Isobutens - gegebenenfalls nach Reinigung und/oder Aufkonzentration des Stromes - gewonnen. Diese C₄-Ströme enthalten typischerweise neben Isobuten größere Mengen 1-Buten und 2-Buten sowie kleinere Mengen an 1,3-Butadien, daneben sind oftmals nennenswerte Anteile an Butanen enthalten. Solche Isobuten enthaltende C₄-Kohlenwasserstoffströme sind beispielsweise C₄-Raffinate wie "Raffinat 2" und insbesondere "Raffinat 1 ", C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Ein C₄-Kohlenwasserstoffstrom aus einer FCC-Raffinerieeinheit ist auch als "b/b"-Strom bekannt. Weitere geeignete Isobuten enthaltende C₄-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C₄-Kohlenwasserstoffströme enthalten in der Regel 3000 Gew.-ppm Butadiene oder weniger. Die Anwesenheit von 1-Buten sowie von cis- und trans-2-Buten ist für die gezielte Polymerisation des Isobutens weitgehend unkritisch.

Typischerweise liegt die Konzentration an Isobuten in den genannten C₄-Kohlenwasserstoffströmen im Bereich von 30 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten, 2 bis 35 Gew.-% Butanen sowie 20 bis 2000 Gew.-ppm Butadiene. Beim Polymerisationsverfahren unter Verwendung von Raffinat 1 verhalten sich die unverzeigten Butene unter geeigneten Reaktionsbedingungen in der Regel praktisch inert und nur das Isobuten wird polymerisiert.

Das geschilderte Polymerisationsverfahren kann diskontinuierlich oder kontinuierlich erfolgen.

Die Polymerisationsreaktion wird zweckmäßigerweise durch Zugabe von Wasser oder von überschüssigen Mengen an basischem Material, beispielsweise gasförmigem oder wässrigem Ammoniak oder wässriger Alkalimetallhydroxid-Lösung wie Natronlauge, abgebrochen. Nach Abtrennung von nicht umgesetzten C₄-Monomeren wird das rohe Polymerisationsprodukt üblicherweise mit destilliertem oder entionisiertem Wasser mehrmals gewaschen, um anhaftende anorganische Bestandteile zu entfernen. Zur Erzielung hoher Reinheiten oder zur Abtrennung unerwünschter nieder- und/oder höhermolekularer Anteile kann das Polymersationsprodukt im Vakuum fraktionierend destilliert werden.

Man erzielt mit dem erfindungsgemäßen Polymerisationsverfahren ein im wesentlichen halogenfreies Polyisobutylen mit dem gewünschten hohen Gehalt an Vinyliden-Doppelbindungen und dem gewünschten Verhältnis von Vinyliden-Doppelbindungen in den Seitenketten und am Ende der Hauptkette. Der Restgehalt an Halogen, welches üblicherweise -je nach eingesetztem Polymerisationskatalysator - als Fluorid oder Chlorid vorliegt, beträgt meistens weniger als 150 Gew.-ppm, vorzugsweise weniger als 80 Gew.-ppm, insbesondere weniger als 50 Gew.-ppm, vor allem weniger als 15 Gew.-ppm.

Gegenstand der vorliegenden Anmeldung ist auch die Verwendung des erfindungsgemäßen Polyisobutylens zur Herstellung von als Kraft- und Schmierstoffadditiven geeigneten Derivaten.

Zur Erzeugung derartiger als Kraft- und Schmierstoffadditive geeigneter Derivate dient zweckmäßigerweise ein Verfahren zur Herstellung von Polyisobutylen-Derivaten der allgemeinen Formel I

POL(-A)ₙ (I)

in der
POL den n-funktionellen Rest des erfindungsgemäßen Polyisobutylens bezeichnet,
A eine niedermolekulare polare Gruppe, welche jeweils eine oder mehrere Aminofunktionen und/oder Nitrogruppen und/oder Hydroxylgruppen und/oder Mercaptan-gruppen und/oder Carbonsäure- oder -Carbonsäurederivatfunktionen, insbesondere Bernsteinsäureanhydrid- oder Bernsteinsäurederivatfunktionen, und/oder Sulfon-säure- oder Sulfonsäurederivatfunktionen und/oder Aldehydfunktionen und/oder Silylgruppen enthält, bedeutet und
die Variable n für eine Zahl von 1 bis 10, vorzugsweise für eine Zahl von 1 bis 3, insbesondere für die Zahl 1 oder 2, vor allem für die Zahl 1 steht, wobei bei n > 1 die Variablen A gleich oder verschieden sein können,
welches dadurch gekennzeichnet ist, dass man das erfindungsgemäße Polyisobutylen mit mindestens n Äquivalenten einer die niedermolekulare polare Gruppe A oder eine Teilstruktur der niedermolekularen polaren Gruppe A einführenden Verbindung umsetzt und im Falle der Umsetzung mit einer Teilstruktur die Bildung der niedermolekularen polaren Gruppe A durch Folgereaktionen vervollständigt.

In einer bevorzugten Ausführungsform dieses Verfahrens zur Herstellung von Polyisobutylen-Derivaten (I) ist die niedermolekulare polare Gruppe A ausgewählt unter
(a) Mono- oder Polyaminogruppen mit bis zu 6 Stickstoffatomen, wobei mindestens ein Stickstoffatom basische Eigenschaften hat;
(b) Nitrogruppen, gegebenenfalls in Kombination mit Hydroxylgruppen;
(c) Hydroxylgruppen, gegebenenfalls in Kombination mit Mono- oder Polyaminogruppen, wobei mindestens ein Stickstoffatom basische Eigenschaften hat;
(d) Carboxylgruppen oder deren Alkalimetall- oder Erdalkalimetallsalzen;
(e) Sulfonsäuregruppen oder deren Alkalimetall- oder Erdalkalimetallsalzen;
(f) Polyoxy-C₂-C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(g) Carbonsäureestergruppen;
(h) Bernsteinsäureanhydrid oder aus Bernsteinsäureanhydrid abgeleiteten Gruppierungen mit Hydroxy- und/oder Amino- und/oder quaternisierten Amino- und/oder Amido- und/oder Imidogruppen, die durch thermische oder halogenkatalysierte Maleinierung der innenständigen Doppelbindungen und der Vinyliden-Doppelbindungen des POL zugrundeliegenden Polyisobutylens mit Maleinsäureanhydrid und im Falle von aus Bernsteinsäureanhydrid abgeleiteten Gruppierungen mit Hydroxy- und/oder Amino- und/oder quaternisierten Amino- und/oder Amido- und/oder Imidogruppen durch entsprechende Folgereaktionen hergestellt wurden, wobei ein resultierendes Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄-Alkylencarbonat und/oder mit Borsäure modifiziert werden kann;
(j) durch Mannich-Umsetzung von durch POL substituierten Phenolen mit Aldehyden und Mono- oder Polyaminen erzeugten Gruppierungen;
(k) Phenol-, Alkylphenol- oder (Hydroxyalkyl)-phenol-Gruppierungen;
(I) Hydroxymethyl-Gruppen;
(m) Gruppierungen, die durch Epoxidierung der Vinyliden-Doppelbindungen des POL zugrundeliegenden Polyisobutylens und nachfolgende
   (i) Hydrolyse zum 1,2-Diol,
   (ii) Umsetzung mit einem Thiol oder einem Polythiol,
   (iii) Umsetzung mit Ammoniak, einem Monoamin oder einem Polyamin,
   (iv) Umsetzung mit einem Boran zu einem Boratester und oxidative Spaltung des Boratesters zum 1,3-Diol,
   (v) Umwandlung in einen Aldehyd,
   (vi) Umwandlung in einen Aldehyd und Umwandlung des Aldehyds in ein Oxim und Reduktion des Oxims zum Amin,
   (vii) Umwandlung in einen Aldehyd und Umwandlung des Aldehyds in ein Azomethinkation und Hydrolyse zum Amin,
   (viii) Umwandlung in einen Aldehyd und Umwandlung des Aldehyds in einen Alkohol oder
   (ix) Umwandlung in einen Aldehyd und Umwandlung des Aldehyds in eine Schiff'sche Base oder ein Enamin und Reduktion der Schiff'schen Base oder des Enamins zum Amin
   erzeugt wurden;
(n) Gruppierungen, die durch Hydroborierung der Vinyliden-Doppelbindungen des POL zugrundeliegenden Polyisobutylens und nachfolgende Oxidation des primären Hydroborierungsproduktes erzeugt wurden; und
(o) Gruppierungen, die durch Hydrosilylierung der Vinyliden-Doppelbindungen des POL zugrundeliegenden Polyisobutylens erzeugt wurden.

Als Beispiele für die obigen niedermolekularen polaren Gruppen A seien die folgenden genannt:
Mono- oder Polyaminogruppen (a) enthaltende Polyisobutylen-Derivate (I) sind beispielsweise gemäß der EP-A 244 616 durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin erhältlich. Geht man bei der Herstellung der Polyisobutylen-Derivate (I) von Polyisobutylen mit einem höheren Anteil an innenständigen Doppelbindungen (meist in der β- und γ-Position) aus, bietet sich auch der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder Polyamine, wie Dimethylaminopropylamin, Ethylendiamin, Diethylentriamin, Triethylentetramin oder Tetraethylenpentamin, eingesetzt werden.

Weitere bevorzugte Monoaminogruppen (a) enthaltende Polyisobutylen-Derivate (I) sind die Hydrierungsprodukte der Umsetzungsprodukte aus einem Polyisobutylen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (a) enthaltende Polyisobutylen-Derivate (I) sind die aus Polyisobutenepoxiden durch Umsetzung mit Aminen und nachfolgender Dehydratisierung und Reduktion der Aminoalkohole erhältlichen Verbindungen, wie sie insbesondere in DE-A-196 20 262 beschrieben sind.

Nitrogruppen (b), gegebenenfalls in Kombination mit Hydroxylgruppen, enthaltende Polyisobutylen-Derivate (I) sind vorzugsweise Umsetzungsprodukte aus einem Polyisobutylen des mittleren Polymerisationsgrades P = 5 bis 100 oder 10 bis 100 mit Stickoxiden oder Gemischen aus Stickoxiden und Sauerstoff, wie sie insbesondere in WO-A-96/03367 und WO-A-96/03479 beschrieben sind. Diese Umsetzungsprodukte stellen in der Regel Mischungen aus reinen Nitropolyisobutylenen (z. B. α,β-Dinitropolyisobutylen) und gemischten Hydroxynitropolyisobutylenen (z. B. α-Nitro-β-hydroxypolyisobutylen) dar.

Hydroxylgruppen in Kombination mit Mono- oder Polyaminogruppen (c) enthaltende Polyisobutylen-Derivate (I) sind insbesondere Umsetzungsprodukte von Polyisobutenepoxiden, erhältlich aus Polyisobutylen mit Ammoniak, Mono- oder Polyaminen, wie sie insbesondere in EP-A-476 485 beschrieben sind. Hydroxylgruppen (c) enthaltende Polyisobutylen-Derivate (I), die keine Mono- oder Polyaminogruppen aufweisen, sind beispielsweise Umsetzungsprodukte von Polyisobutenepoxiden mit Wasser (Hydrolyse) oder mit Alkoholen wie Methanol oder Ethanol oder die Produkte einer Reduktion der Epoxidfunktion, beispielsweise mittels Lithiumaluminumhydrid.

Carboxylgruppen oder deren Alkalimetall- oder Erdalkalimetallsalze (d) enthaltende Polyisobutylen-Derivate (I) sind in der Regel Polyisobutylene, in die eine oder mehrere Carboxylgruppen, beispielsweise durch Umsetzung mit Maleinsäureanhydrid, eingeführt worden, wonach die Carboxylgruppen ganz oder teilweise zu den Alkalimetall- oder Erdalkalimetallsalzen und ein verbleibender Rest der Carboxylgruppen mit Alkoholen oder Aminen umgesetzt sind.

Sulfonsäuregruppen oder deren Alkalimetall- oder Erdalkalimetallsalze (e) enthaltende Polyisobutylen-Derivate (I) sind in der Regel Polyisobutylene, in die eine oder mehrere Sulfonsäuregruppen eingeführt worden, wonach die Sulfonsäuregruppen ganz oder teilweise zu den Alkalimetall- oder Erdalkalimetallsalzen und ein verbleibender Rest der Carboxylgruppen mit Alkoholen oder Aminen umgesetzt sind. Analoge Alkalimetall- oder Erdalkalimetallsalze von Sulfobernsteinsäurealkylestern sind in der EP-A-639 632 beschrieben. Derartige Verbindungen dienen hauptsächlich zur Verhinderung von Ventilsitzverschleiß und können mit Vorteil in Kombination mit üblichen Kraftstoffdetergenzien wie Poly(iso)butylenaminen oder Polyetheraminen eingesetzt werden.

Polyoxy-C₂-C₄-alkylengruppierungen (f) enthaltende Polyisobutylen-Derivate (I) sind vorzugsweise Polyether oder Polyetheramine, welche durch Umsetzung von hydroxyl- oder aminogruppenhaltigen Polyisobutylenen mit 1 bis 30 mol Ethylenoxid und/oder Propylenoxid und/oder Butylenoxid pro Hydroxylgruppe oder Aminogruppe und - im Falle von Polyetheraminen - durch anschließende reduktive Aminierung mit Ammoniak, Monoaminen oder Polyaminen erhältlich sind. Analoge Umsetzungsprodukte von C₂-C₆₀-Alkanolen, C₆-C₃₀-Alkandiolen, Mono- oder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe werden in EP-A-310 875, EP-A-356 725, EP-A-700 985 und US-A-4 877 416 beschrieben.

Carbonsäureestergruppen (g) enthaltende Polyisobutylen-Derivate (I) sind vorzugsweise Ester aus Mono-, Di- oder Tricarbonsäuren mit hydroxylgruppenhaltigen Polyisobutenen. Analoge Umsetzungsprodukte von langkettigen Alkanolen oder Polyolen mit Mono-, Di- oder Tricarbonsäuren sind in DE-A-38 38 918 beschrieben. Als Mono-, Di- oder Tricarbonsäuren können aliphatische oder aromatische Säuren eingesetzt werden. Typische Vertreter solcher Ester sind entsprechende Adipate, Phthalate, iso-Phthalate, Terephthalate und Trimellitate.

Bernsteinsäueanhydrid (h) enthaltende Polyisobutylen-Derivate (I) sind insbesondere Polyisobutenylbernsteinsäureanhydride, welche durch Umsetzung von Polyisobutylen mit Maleinsäureanhydrid auf thermischem Weg oder über das entsprechende chlorierte Polyisobutylen erhältlich sind. Das eingesetzte Polyisobutylen kann dabei mit 1 Äquivalent ("Monomaleinierung"), mit 2 Äquivalenten Maleinsäureanhydrid ("Bismaleinierung") oder mit 1 < k < 2 Äquivalenten Maleinsäureanhydrid, z. B. mit 1,05 bis 1,3 Äquivalenten Maleinsäureanhydrid, umgesetzt werden.

Aus Bernsteinsäureanhydrid abgeleitete Gruppierungen mit Hydroxy- und/oder Amino- und/oder quaternisierten Amino- und/oder Amido- und/oder Imidogruppen (h) enthaltende Polyisobutylen-Derivate (I) sind vorzugsweise entsprechende Derivate von polyisobutenylsubstituiertem Bernsteinsäureanhydrid und insbesondere die entsprechenden Derivate von Polyisobutenylbernsteinsäureanhydrid, welche durch Umsetzung von Polyisobutylen mit höheren Anteilen an innenständigen Doppelbindungen mit Maleinsäureanhydrid auf thermischem Weg oder über das chlorierte Polyisobutylen erhältlich sind. Von besonderem Interesse sind hierbei Derivate mit Alkoholen wie Methanol, Ethanol, n-Propanol, Isopropanol, n-Butanol, Isobutanol, sec.-Butanol, tert.-Butanol oder Polyethern, die durch Oxalkylierung der genannten niedermolekularen Alkanole mit C₂- bis C₄-Alkylenoxiden hergestellt worden sind. Bei den Gruppierungen mit Hydroxy-, gegebenenfalls quaternisierten Amino-, Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Derartige Verbindungen sind als Kraftstoffadditive in US-A-4 849 572 beschrieben.

Unter aus Bernsteinsäureanhydrid abgeleitete Gruppierungen mit quaternisierten Aminogruppen enthaltenden Polyisobutylen-Derivaten (I) sind insbesondere quaternisierte Stickstoffverbindungen zu verstehen, die durch Addition einer Verbindung, die wenigstens eine mit einem Anhydrid reaktive Sauerstoff- oder Stickstoff-haltige Gruppe und zusätzlich wenigstens eine quaternisierbare Aminogruppe enthält, an Polyisobutenylbernsteinsäureanhydrid und nachfolgende Quaternisierung, insbesondere mit einem Epoxid, insbesondere in Abwesenheit von freier Säure, erhältlich sind, wie sie in der WO 2012/004300 beschrieben werden. Als Verbindungen mit wenigstens einer mit einem Anhydrid reaktiven Sauerstoff- oder Stickstoff-haltigen Gruppe und zusätzlich wenigstens einer quaternisierbaren Aminogruppe eignen sich insbesondere Polyamine mit mindestens einer primären oder sekundären Aminogruppe und mindestens einer tertiären Aminogruppe. Eine solche quaternisierte Stickstoffverbindung ist beispielsweise das bei 40°C erhaltene Umsetzungsprodukt von Polyisobutenylbernsteinsäureanhydrid, bei dem der Polyisobutenylrest typischerweise ein Mₙ von 1000 aufweist, mit 3-(Dimethylamino)-propylamin, welches ein Polyisobutenylbernsteinsäurehalbamid darstellt und das anschließend mit Styroloxid in Abwesenheit von freier Säure bei 70°C quaternisiert wird.

In der Gruppe (h) resultierende Carbonsäureamid- und Carbonsäureimid-Derivate können, insbesondere beim Einsatz im Schmierstoff-Formulierungen, zur Verbesserung des Quellverhaltens von Elastomeren, welche beispielsweise in Dichtungen von Motoren, Aggregaten oder Vorrichtungen, die mit den genannten Derivaten oder mit diese enthaltenden Schmierstoff-Formulierungen in Kontakt kommen, eingebaut sind, noch mit mindestens einem C₂- bis C₁₂-Dicarbonsäureanhydrid wie Maleinsäureanhydrid oder Phthalsäureanhydrid, mit mindestens einem C₂-bis C₄-Alkylencarbonat wie Ethylencarbonat oder Propylencarbonat und/oder mit Borsäure modifiziert werden.

Durch Mannich-Umsetzung von substituierten Phenolen mit Aldehyden und Mono- oder Polyaminen erzeugte Gruppierungen (j) enthaltende Polyisobutylen-Derivate (I) sind vorzugsweise Umsetzungsprodukte von Polyisobutyl-substituierten Phenolen mit Aldehyden wie Formaldehyd, welcher beispielsweise auch in oligomerer oder polymerer Form, z. B. als Paraformaldehyd, eingesetzt werde kann, und mit Monoaminen, z. B. Dimethylamin, Diethylamin, Propylamin, Butylamin oder Morpholin, oder mit Polyaminen, z. B. Ethylendiamin, Diethylentriamin, Triethylentetramin, Tetraethylenpentamin oder Dimethylaminopropylamin. Derartige "Polyisobuten-Mannichbasen" auf Basis von hochreaktivem Polyisobuten mit Mₙ = 300 bis 5000 sind in der EP-A-831 141 beschrieben.

Phenol-, Alkylphenol- oder (Hydroxyalkyl)-phenol-Gruppierungen (k) enthaltende Polyisobutylen-Derivate (I) sind insbesondere die Vorstufen zu den Polyisobutylen-Mannichbasen in der Gruppe (j), welche durch Umsetzung von Polyisobutylen mit einem oder mehreren entsprechenden Phenolen, gegebenenfalls mit nachfolgender Umsetzung mit einem Aldehyd, gebildet werden. Das Polyisobutylen kann hierzu zum Beispiel mit unsubstituiertem Phenol, o-, m- oder p-Kresol, Xylenol, Hydrochinon, Brenzkatechin oder Resorcin umgesetzt werden. So gebildetes Polyisobutyl-substituiertes Phenol kann beispielsweise weiter mit einem Aldehyd wie Formaldehyd oder Paraformaldehyd zu einem Polyisobutyl-substituiertem Hydroxyalkylphenol, insbesondere einem Polyisobutyl-substituiertem Hydroxymethylphenol, z. B. zu 1-Hydroxymethyl-4-polyisobutylphenol, umgewandelt werden.

Hydroxymethyl-Gruppen (I) enthaltende Polyisobutylen-Derivate (I) sind insbesondere die Zwischenprodukte bei der Hydroformylierung von hochreaktivem Polyisobuten gemäß EP-A 244 616 in Gegenwart von Kohlenmonoxid und Wasserstoff mittels eines geeigneten Hydroformylierungskatalysators wie einem Rhodium- oder Kobaltkatalysator bei Temperaturen von 80 bis 200 °C und CO/H₂-Drücken von bis zu 600 bar. Ein so erzeugtes Hydroxymethylpolyisobutylen kann dabei als Produktgemisch zusammen mit einem eine Aldehyd-Gruppe enthaltendem Polyisobutylen anfallen.

Die in der Gruppe (m) unter (i) bis (ix) aufgeführten Gruppierungen, welche in den Polyisobutylen-Derivaten (I) enthalten sein können, und ihre Erzeugung sind im Rahmen von Folgeumsetzungen von Polyisobutylen-Epoxiden beispielsweise in der WO 2007/025700 näher beschrieben und werden nachfolgend wiedergegeben:
Das Epoxid kann z. B. mit Wasser zu 1,2-Diolen hydrolysiert oder mit Thiolen oder primären oder sekundären Aminen umgesetzt werden, wobei man unter anderem Glykolthioether und Amine erhält.

Durch Umsetzung eines Polyisobutylens, das durchschnittlich wenigstens 0,7, vorzugsweise wenigstens 0,9, Epoxygruppen pro Molekül aufweist, mit Polyolen oder insbesondere Polythiolen wie Trimethylolpropan-tris-(3-mercaptopropionat) oder Penta-erythritol-tetrakis-(3-mercapto-propionat), oder Polyaminen wie Diethylentriamin, erhält man Netzwerke, die aufgrund ihrer elastischen und dämpfenden Eigenschaften vorteilhaft sind.

In einer bevorzugten Folgereaktion lagert man das Epoxid zum Aldehyd um, was beispielsweise unter Katalyse mittels Alumosilikaten, z. B. Zeolithen, saurem Aluminiumoxid, Lewissäuren, wie Aluminium- oder Zinksalzen, z. B. Zinkbromid, oder Protonensäuren wie Schwefelsäure, erfolgen kann. Der Aldehyd ist seinerseits ein vielseitiges Ausgangsmaterial für wertvolle Produkte. Die Umwandlung von Polyisobutylen-Epoxiden in Aldehyde ist z.B. in der WO 90/10022 und der US 6,303,703 oder Organikum, 20. Aufl. 1999, Wiley-VCH, S. 615, beschrieben.

Man kann den Aldehyd mit Ammoniak oder einem primären Amin in ein Imin umwandeln und das Imin zum Amin reduzieren, insbesondere katalytisch hydrieren. Geeignete primäre Amine sind z.B. Diethylentriamin, Di(methylethylen)triamin, Triethylentetramin, Tri(methylethylen)-tetramin, Tri(ethylethylen)tetramin, Tetraethylenpentamin, Pentaethylenhexamin, Ethylendiamin, Hexamethylendiamin, o-Phenylendiamin, m-Pheny-lendiamin, p-Phenylendiamin, alkylsubstituiertes o-, m- und p-Phenylendiamin, Dimethylaminomethylamin, Dimethylaminoethylamin, Dimethylaminopropylamin, Dimethylaminobutylamin, Dimethylaminoheptylamin, Diethylaminomethylamin, Diethylaminopropylamin, Diethylaminoamylamin, Dipropylaminopropylamin, Methylpropylaminoamylamin, Propylbutylaminoethylamin, Dimethylentrianilin, Methylendianilin, Polymethylenanilin und Polyalkylmethylenanilin. Die Umsetzung des Aldehyds mit dem primären Amin und die Hydrierung des erhaltenen Imins zu einem Polyisobutenylamin ist in der WO 90/10022 beschrieben.

Man kann den Aldehyd auch in ein Oxim umwandeln und das Oxim zum Amin reduzieren. Zweckmäßigerweise setzt man Hydroxylamin ein, das man durch Neutralisieren eines Hydroxylamoniumsalzes erhält. Das Hydroxylamin reagiert mit dem Aldehyd zum Oxim. Man reduziert das Oxim dann durch katalytische Hydrierung zum Amin. Die Hydrierung erfolgt bei geeigneter Temperatur und Druck in Gegenwart eines Hydrierkatalysators. Geeignete Katalysatoren sind zum Beispiel Raney-Nickel, Nickel auf Kieselgur, Kupferchromit, Platin auf Kohle, Palladium auf Kohle und dergleichen. Die Umsetzung ist z. B. in der US 6,303,703 beschrieben.

In einer weiteren bevorzugten Ausführungsform wandelt man den Aldehyd in einer Leuckart-Reaktion in ein Azomethinkation um. Zur Durchführung der Leuckart-Reaktion sind verschiedene Reagenzien geeignet, Ammoniumformiat wird bevorzugt. Das Azomethinkation kann dann durch Hydrolyse in ein Amin umgewandelt werden. Die Hydrolyse kann in geeigneter Weise mit verdünnter Salzsäure bei mäßig erhöhter Temperatur durchgeführt werden. Vorzugsweise verwendet man dabei einen Phasentransferkatalysator wie Tricaprylymethylammoniumnitrat. Die Umsetzung ist beispielsweise in der US 6,303,703 beschrieben.

Das Epoxid kann weiterhin durch Umsetzung mit einem Boran und anschließende oxidative Spaltung des gebildeten Boratesters zu einem 1,3-Diol, beispielsweise zu 2-Polyisobutenyl-1,3-propandiol, umgesetzt werden. Geeignete Borane sind z. B. Diboran (B₂H₆) sowie Alkyl- und Arylborane. Dem Fachmann ist geläufig, dass derartige Borane auch in situ aus einem Borhydrid und einer Säure, meist BF₃-Etherat, hergestellt werden können. Die Umsetzung mit dem Boran erfolgt in geeigneter Weise in einem Boran-koordinierenden Lösungsmittel. Beispiele hierfür sind offenkettige Ether wie Dialkyl-, Diaryl- oder Alkylarylether, sowie cyclische Ether wie Tetrahydrofuran oder 1,4-Dioxan, aber auch Lösungsmittel wie Toluol, Cyclohexan und Methylenchlorid sind geeignet. Die oxidative Spaltung zu einem 1,3-Diol kann beispielsweise mittels Wasserstoffperoxid in Gegenwart einer Base unter Erwärmen auf z. B. 50 bis 75°C erfolgen. Geeignete Lösungsmittel hierfür sind Ether oder Gemische von Ethern und Kohlenwasserstoffen.

Aus Hydroborierungsreaktionen resultierende Gruppierungen (n), welche in den Polyisobutylen-Derivaten (I) enthalten sein können, und ihre Erzeugung sind z. B. in der WO 2004/067583 näher beschrieben. Allgemeine Grundlagen der Hydroborierung sind in J. March, Advanced Organic Chemistry, 4. Auflage, Verlag J. Wiley & Sons, S. 783-789, beschrieben.

Zu den geeigneten Boranquellen zählt vor allem Boran (BH₃) selbst, welches üblicherweise in Form seines Dimeren (B₂H₆) auftritt. Zweckmäßigeweise wird das Boran in situ durch Umsetzung geeigneter Vorläufer, insbesondere von Alkalimetall- oder Erdalkalimetallsalzen des BH₄-Anions mit Bortrihalogeniden, erzeugt. Typischerweise verwendet man hierbei Natriumborhydrid und Bortrifluorid-Etherat.

Ein bevorzugtes Hydroborierungsagens für die Vinyliden-Doppelbindungen des Polyisobutylens ist das Umsetzungsprodukt einer Boranquelle, z. B. in situ aus Alkalimetall- oder Erdalkalimetallsalzen des BH₄-Anions mit Bortrihalogeniden erzeugtes Boran, mit 0,5 bis 1,8 Äquivalentes pro Mol Boran eines Alkens eines Molekulargewichtes von weniger als 250, z. B. 2-Methyl-2-buten oder 1-Methylcyclohexen.

Die nachfolgende Oxidation des primären Hydroborierungsproduktes erfolgt typischerweise mit alkalischem Wasserstoffperoxid unter Erhalt eines Alkohols, der vorzugsweise formal dem Anti-Markovnikov-Hydratisierungsprodukt des ungesättigten Isobutenpolymeren entspricht. Alternativ können die als primäres Hydroborierungsprodukt erhaltenen Polyisobutylborane auch einer oxidativen Umsetzung mit Brom in Gegenwart von Hydroxidionen unter Erhalt des Bromids unterzogen werden.

Aus Hydrosilylierungsreaktionen resultierende Gruppierungen (o), welche in den Polyisobutylen-Derivaten (I) enthalten sein können, und ihre Erzeugung sind beispielsweise in der WO 2003/074577 näher beschrieben. Hierzu kann das Polyisobutylen einer Umsetzung mit einem Silan in Gegenwart eines Silylierungskatalysators unter Erhalt eines wenigstens teilweise mit Silylgruppen funktionalisierten Polyisobutylens unterworfen werden. Silylierte Polyisobutylene wiederum stellen wertvolle Ausgangsmaterialien für Folgeumsetzungen zu neuen Produkten dar, beispielsweise für feuchtigkeitshärtende Dichtungsmassen und für Formulierungen, bei denen Glashaftung eine Rolle spielt.

Geeignete Hydrosilylierungskatalysatoren sind insbesondere Übergangsmetallkatalysatoren, wobei das Übergangsmetall unter Pt, Pd, Rh, Ru und Ir ausgewählt ist, z. B. feinverteiltes Platin, Platinchlorid, Hexachloroplatinsäure, Tetramethyldivinyldisiloxan-Platin-Komplexe, RhCl[P(C₆H₅)₃]₃, RhCl₃, RuCl₃ oder IrCl₃. Geeignete Hydrosilylierungskatalysatoren sind weiterhin Lewis-Säuren wie Aluminiumtrichlorid oder Titantetrachlorid sowie Peroxide.

Geeignete Silane sind z. B. halogenierte Silane wie Trichlorsilan, Methyldichlorsilan, Dimethylchlorsilan und Trimethylsiloxydichlorsilan, Alkoxysilane wie Trimethoxysilan, Triethoxysilan, Methyldimethoxysilan, Phenyldimethoxysilan, 1,3,3,5,5,7,7-Heptamethyl-1,1-dimethoxytetrasiloxan sowie Acyloxysilane.

Die Reaktionstemperatur bei der Hydrosilylierung liegt vorzugsweise im Bereich von 0 bis 140° C, insbesondere bei 40 bis 120°C. Die Reaktion wird üblicherweise bei Normaldruck durchgeführt, kann jedoch auch bei erhöhten Drücken, z. B. bei 1,5 bis 20 bar, oder verringerten Drücken, z. B. b ei 200 bis 600 mbar, erfolgen. Die Reaktion kann ohne Lösungsmittel oder in Gegenwart eines geeigneten inerten Lösungsmittels wie Toluol, Tetrahydrofuran oder Chloroform erfolgen.

In einer bevorzugten Ausführungsform wird das erfindungsgemäße Verfahren zur Herstellung von Polyisobutylen-Derivaten der allgemeinen Formel I, in der A eine niedermolekulare polare Gruppe, welche eine Aminofunktion enthält, bedeutet, so durchgeführt, dass man das erfindungsgemäße hochreaktive Polyisobutylen mit einem geeignetem Katalysator in Gegenwart von Kohlenmonoxid und Wasserstoff hydroformyliert und anschließend in Gegenwart von mindestens n Äquivalenten Ammoniak oder eines Mono- oder Polyamins reduktiv aminiert.

Die Hydroformylierung und die reduktive Aminierung von hochreaktiven Polyisobutenen sind beispielsweise in der EP-A 244 616 beschrieben. Dabei wird die Hydroformylierung in Gegenwart von Kohlenmonoxid und Wasserstoff üblicherweise mittels eines geeigneten Hydroformylierungskatalysators wie einem Rhodium- oder Kobaltkatalysator bei Temperaturen von 80 bis 200°C und CO/H₂-Drücken von bis zu 600 bar durchgeführt. Die sich anschließende reduktive Aminierung des erhaltenen Oxoproduktes (Hydroxymethylpolyisobuten oder Produktgemisch aus Hydroxymethylpolyisobuten und Polyisobuten-Aldehyd gleicher Kohlenstoffzahl) erfolgt in der Regel bei Temperaturen von 80 is 200°C und Wasserstoffdrücken von bis zu 600 bar, insbesondere 80 bis 300 bar.

In einer weiteren bevorzugten Ausführungsform wird das erfindungsgemäße Verfahren zur Herstellung von Polyisobutylen-Derivaten der allgemeinen Formel I, in der A eine niedermolekulare polare Gruppe, welche eine Aminofunktion enthält, bedeutet, so durchgeführt, dass man das erfindungsgemäße hochreaktive Polyisobutylen mit einem geeignetem Aktivierungsmittel, insbesondere mit Chlor, behandelt und anschließend mit n Äquivalenten Ammoniak oder eines Mono- oder Polyamins umsetzt.

In einer weiteren bevorzugten Ausführungsform wird das erfindungsgemäße Verfahren zur Herstellung von Polyisobutylen-Derivaten der allgemeinen Formel I, in der A eine niedermolekulare polare Gruppe, welche eine Carbonsäurederivatfunktion, insbesondere eine Carbonsäureimidfunktion, enthält, bedeutet, so durchgeführt, dass man das erfindungsgemäße hochreaktive Polyisobutylen mit einer ethylenisch ungesättigten C₄- bis C₁₂-Dicarbonsäure oder einem reaktivem Derivat hiervon, insbesondere mit Maleinsäureanhydrid, thermisch oder halogenkatalysiert umsetzt und gegebenenfalls anschließend mit einem Mono- oder Polyamin in das entspechende Carbonsäureamid- oder Carbonsäureimid-Derivat umwandelt, wobei das resultierende Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄-Alkylencarbonat und/oder mit Borsäure modifiziert werden kann.

In einer weiteren bevorzugten Ausführungsform wird das erfindungsgemäße Verfahren zur Herstellung von Polyisobutylen-Derivaten der allgemeinen Formel I, in der A eine niedermolekulare polare Gruppe, welche eine Aminofunktion enthält, bedeutet, so durchgeführt, dass man das erfindungsgemäße hochreaktive Polyisobutylen mit einem Phenol in das entsprechende Alkylphenol umwandelt und dieses anschließend durch Umsetzung mit einem Aldehyd und einem primären oder sekundären Amin in das entsprechende Mannich-Addukt überführt.

Das neue erfindungsgemäße Polyisobutylen mit einem hohen Gehalt an Vinyliden-Doppelbindungen in den Seitenketten erlaubt die Erzeugung von als Kraft- und Schmierstoffadditiven geeigneten Derivaten, welche eine überraschend bessere Performance aufweisen. Insbesondere lassen sich aus diesem hochreaktiven Polyisobutylen Derivate herstellen, die gegenüber entsprechenden aus herkömmlichem hochreaktiven Polyisobuten erzeugten Derivaten verbesserte Performanceeigenschaften aufweist, insbesondere eine verbesserten Reinigungs- und Reinhaltungswirkung bei Einlassventilen und Einspritzdüsen in Ottomotoren.

Die nachfolgenden Beispiele sollen die vorliegende Erfindung erläutern, ohne sie zu beschränken.

### Beispiel 1: Herstellung eines erfindungsgemäßen Polyisobutylens

In eine kontinuierlich betriebene Polymerisationsapparatur, bestehend aus einem mantelgekühlten Rührreaktor mit einem Volumen von 800 ml und einem mechanischen Rührer, einem Edukt-Eintragsrohr mit Vorkühlung des Eduktes, einem Einleitungsrohr für gasförmiges Bortrifluorid, einem Tropftrichter für die Alkoholkomponente und einem Ansaugstutzen für den kontinuierlichen Austrag des Reaktorinhaltes, wurden 9,0 l/h eines Isobuten-haltigen Eduktstromes der unten angegebenen Zusammensetzung, dem vor Einspeisung in den Reaktor 100 g/h eines Isobutenoligomeren-Stromes der unten angegebenen Zusammensetzung zugegeben worden war, 8,0 g/h Bortrifluorid und 8,0 g/h einer Mischung aus 50 Vol.-% Methanol und 50 Vol.-% Isopropanol eindosiert. Die Polymerisation wurde bei -17°C bis -20°C Reaktorinnentemperatur durchgeführt. Die Durchflussmenge (= Edukt-Eintragsmenge = Rohprodukt-Austragsmenge) betrug ca. 9,06 l/h.

Die Zusammensetzung des als Raffinat 1 zu klassifizierenden Eduktstromes (Dichte: 0,6 g/l) war folgende:

| | |
|---|---|
| Isobuten | 42,5 Gew.-% |
| 1-Buten | 26,3 Gew.-% |
| trans-2-Buten | 7,9 Gew.-% |
| cis-2-Buten | 4,8 Gew.-% |
| Isobutan | 6,1 Gew.-% |
| n-Butan | 12,4 Gew.-% |
| Butadien | 338 Gew.-ppm |

Die Zusammensetzung des Isobutenoligomeren-Stromes (gemitteltes Molekulargewicht: 202,6 g/mol) war folgende:

| | |
|---|---|
| 3 Gew.-% | C4 |
| 18 Gew.-% | C8 |
| 24 Gew.-% | C12 |
| 31 Gew.-% | C16 |
| 17 Gew.-% | C20 |
| 7 Gew.-% | >C20 |

Das Mol-Verhältnis der in der im Polymerisationsmedium vorliegenden Isobutenoligomeren-Mischung enthaltenen Vinyliden-Doppelbindungen zu den Doppelbindungen des eingesetzten Isobuten-Monomers betrug hierbei 1,2 : 100.

Zur Aufarbeitung wurde der zunächst noch kalte Reaktoraustrag mit einem Überschuss an 70°C heißem, demineralisiertem Wasser behandelt und intensiv gemischt. Die Menge des Wassers wurde dabei so gewählt, dass die Mischtemperatur beider Phasen 20°C betrug. Dabei verdampfte bereits ein Teil des Lösungsmittels. Nach 20 Minuten Verweilzeit wurde die obere organische Phase abgetrennt und Produktproben wurden für die Analyse in einem Rotationsverdampfer vom restlichen Lösungsmittel befreit (Ölbadtemperatur: 150°C bei 30 mbar Vakuum für 30 Minuten).

Man erhielt ein Polyisobutylen mit einem durch GPC bestimmten zahlengemittelten Molekulargewicht (Mₙ) von 975 Dalton und einer Polydispersität von 1,83. Der Gesamtgehalt an Vinyliden-Doppelbindungen betrug 81,8 Mol-%, wovon der Gehalt an terminalen Vinyliden-Doppelbindungen (α-Doppelbindungen am Ende der Polymer-Hauptkette) bei 71,8 Mol-% und der Gehalt an Vinyliden-Doppelbindungen in den Seitenketten bei 10,0 Mol-% lag (jeweils bestimmt mittels ¹H-NMR); damit waren 12,2% aller Vinyliden-Doppelbindungen in den Seitenketten lokalisiert. Die übrigen 18,2 Mol-% Doppelbindungen waren trisubstituierte Doppelbindungen (14,1 Mol-%) und tetrasubstituierten Doppelbindungen (4,1 Mol-%) zuzuordnen.

### Beispiel 2: Herstellung eines nicht erfindungsgemäßen Polyisobutylens

Wurde das oben beschriebene Beispiel 1 mit Einspeisung von nur 10 g/h des genannten Isobutenoligomeren-Stromes durchgeführt, ergab sich ein Polyisobutylen mit einem durch GPC bestimmten zahlengemittelten Molekulargewicht (Mₙ) von 993 Dalton und einer Polydispersität von 1,85. Der Gesamtgehalt an Vinyliden-Doppelbindungen betrug 83,9 Mol-%, wovon der Gehalt an terminalen Vinyliden-Doppelbindungen (α-Doppelbindungen am Ende der Polymer-Hauptkette) bei 78,3 Mol-% und der Gehalt an Vinyliden-Doppelbindungen in den Seitenketten bei 5,6 Mol-% lag (jeweils bestimmt mittels ¹H-NMR) damit waren 7,2% aller Vinyliden-Doppelbindungen in den Seitenketten lokalisiert.

Das Mol-Verhältnis der in der im Polymerisationsmedium vorliegenden Isobutenoligomeren-Mischung enthaltenen Vinyliden-Doppelbindungen zu den Doppelbindungen des eingesetzten Isobuten-Monomers betrug hierbei 0,1 : 100.

### Beispiel 3: Herstellung eines nicht erfindungsgemäßen Polyisobutylens

Wurde das oben beschriebene Beispiel 1 ohne Einspeisung des separaten Isobutenoligomeren-Stromes durchgeführt, ergab sich ein Polyisobutylen mit einem durch GPC bestimmten zahlengemittelten Molekulargewicht (Mₙ) von 1017 Dalton und einer Polydispersität von 1,86. Der Gesamtgehalt an Vinyliden-Doppelbindungen betrug 84,3 Mol-%, wovon der Gehalt an terminalen Vinyliden-Doppelbindungen (α-Doppelbindungen am Ende der Polymer-Hauptkette) bei 79,8 Mol-% und der Gehalt an Vinyliden-Doppelbindungen in den Seitenketten bei 4,5 Mol-% lag (jeweils bestimmt mittels ¹H-NMR) damit waren 5,3% aller Vinyliden-Doppel-bindungen in den Seitenketten lokalisiert.

## Patentansprüche

1. Polyisobutylen mit einem Gesamtgehalt an Vinyliden-Doppelbindungen von mehr als 50 Mol-% und einem zahlengemittelten Molekulargewicht (Mₙ) von 500 bis 10.000 Dalton, wobei mindestens 10% aller Vinyliden-Doppelbindungen des Polyisobutylens Bestandteil einer oder mehrerer Seitenketten aus mindestens 2 Kohlenstoffatomen zur Polyisobutylen-Hauptkette sind.

2. Polyisobutylen nach Anspruch 1 mit einem Gesamtgehalt an Vinyliden-Doppelbin-dungen von mehr als 70 Mol-% und einem zahlengemittelten Molekulargewicht (Mₙ) von 900 bis 2500 Dalton, wobei mindestens 12% aller Vinyliden-Doppelbin-dungen des Polyisobutylens Bestandteil einer oder mehrerer Seitenketten aus mindestens 2 Kohlenstoffatomen zur Polyisobutylen-Hauptkette sind.

3. Polyisobutylen nach Anspruch 1 oder 2, bei dem die Vinyliden-Doppelbindungen, die Bestandteil einer oder mehrerer Seitenketten aus mindestens 2 Kohlenstoffatomen zur Polyisobutylen-Hauptkette sind, jeweils in α-Stellung an den distalen Ende der Seitenketten angeordnet sind.

4. Polyisobutylen nach den Ansprüche 1 bis 3 mit einer Polydispersität von 1,05 bis 2,0.

5. Verfahren zur Herstellung eines Polyisobutylens gemäß den Ansprüchen 1 bis 4, **dadurch gekennzeichnet, dass** man in einer Polymerisationsapparatur Isobuten oder ein Isobuten-haltiges C₄-Kohlenwasserstoff-Gemisch in Gegenwart einer Mischung aus im wesentlichen Isobutenoligomeren aus 2 bis 5 Isobuten-Einheiten bei Temperaturen von -100°C bis +100°C mittels eines Brönsted-Säure-basierten oder Lewis-Säure-basierten Polymerisationskatalysators polymerisiert, wobei das Mol-Verhältnis der in der im Polymerisationsmedium vorliegenden Isobutenoligomeren-Mischung enthaltenen Vinyliden-Doppelbindungen zu den Doppelbindungen des eingesetzten Isobuten-Monomers mindestens 1 : 100 beträgt.

6. Verfahren zur Herstellung eines Polyisobutylens nach Anspruch 5, **dadurch gekennzeichnet, dass** man die aus im wesentlichen Isobutenoligomeren aus 2 bis 5 Isobuten-Einheiten bestehende Mischung separat herstellt und vor oder während der Polymerisation des Isobutens oder des Isobuten-haltigen C₄-Kohlenwasser-stoff-Gemisches in das Polymerisationsmedium einführt.

7. Verwendung eines Polyisobutylens gemäß den Ansprüchen 1 bis 4 zur Herstellung von als Kraft- und Schmierstoffadditiven geeigneten Derivaten hiervon.

8. Verfahren zur Herstellung von Polyisobutylen-Derivaten der allgemeinen Formel I
POL(-A)ₙ (I)
in der
POL den n-funktionellen Rest eines Polyisobutylens gemäß den Ansprüchen 1 bis 4 bezeichnet,
A eine niedermolekulare polare Gruppe, welche jeweils eine oder mehrere Aminofunktionen und/oder Nitrogruppen und/oder Hydroxylgruppen und/oder Mercaptan-gruppen und/oder Carbonsäure- oder -Carbonsäurederivatfunktionen, insbesondere Bernsteinsäureanhydrid- oder Bernsteinsäurederivatfunktionen, und/oder Sulfon-säure- oder Sulfonsäurederivatfunktionen und/oder Aldehydfunktionen und/oder Silylgruppen enthält, bedeutet und
die Variable n für eine Zahl von 1 bis 10 steht, wobei bei n > 1 die Variablen A gleich oder verschieden sein können,
**dadurch gekennzeichnet, dass** man das Polyisobutylen gemäß den Ansprüchen 1 bis 4 mit mindestens n Äquivalenten einer die niedermolekulare polare Gruppe A oder eine Teilstruktur der niedermolekularen polaren Gruppe A einführenden Verbindung umsetzt und im Falle der Umsetzung mit einer Teilstruktur die Bildung der niedermolekularen polaren Gruppe A durch Folgereaktionen vervollständigt.

9. Verfahren nach Anspruch 8 zur Herstellung von Polyisobutylen-Derivaten der allgemeinen Formel I, bei denen die niedermolekulare polare Gruppe A ausgewählt ist unter
(a) Mono- oder Polyaminogruppen mit bis zu 6 Stickstoffatomen, wobei mindestens ein Stickstoffatom basische Eigenschaften hat;
(b) Nitrogruppen, gegebenenfalls in Kombination mit Hydroxylgruppen;
(c) Hydroxylgruppen, gegebenenfalls in Kombination mit Mono- oder Polyaminogruppen, wobei mindestens ein Stickstoffatom basische Eigenschaften hat;
(d) Carboxylgruppen oder deren Alkalimetall- oder Erdalkalimetallsalzen;
(e) Sulfonsäuregruppen oder deren Alkalimetall- oder Erdalkalimetallsalzen;
(f) Polyoxy-C₂-C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(g) Carbonsäureestergruppen;
(h) Bernsteinsäureanhydrid oder aus Bernsteinsäureanhydrid abgeleiteten Gruppierungen mit Hydroxy- und/oder Amino- und/oder quaternisierten Amino- und/oder Amido- und/oder Imidogruppen, die durch thermische oder halogenkatalysierte Maleinierung der innenständigen Doppelbindungen und der Vinyliden-Doppelbindungen des POL zugrundeliegenden Polyisobutylens mit Maleinsäureanhydrid und im Falle von aus Bernsteinsäureanhydrid abgeleiteten Gruppierungen mit Hydroxy- und/oder Amino- und/oder quaternisierten Amino- und/oder Amido- und/oder Imidogruppen durch entsprechende Folgereaktionen hergestellt wurden, wobei ein resultierendes Carbonsäureamid- oder Carbonsäureimid-Derivat noch durch weitere Umsetzung mit mindestens einem C₂- bis C₁₂-Diarbonsäureanhydrid, mit mindestens einem C₂- bis C₄-Alkylencarbonat und/oder mit Borsäure modifiziert werden kann;
(j) durch Mannich-Umsetzung von durch POL substituierten Phenolen mit Aldehyden und Mono- oder Polyaminen erzeugten Gruppierungen;
(k) Phenol-, Alkylphenol- oder (Hydroxyalkyl)-phenol-Gruppierungen;
(I) Hydroxymethyl-Gruppen;
(m) Gruppierungen, die durch Epoxidierung der Vinyliden-Doppelbindungen des POL zugrundeliegenden Polyisobutylens und nachfolgende
(i) Hydrolyse zum 1,2-Diol,
(ii) Umsetzung mit einem Thiol oder einem Polythiol,
(iii) Umsetzung mit Ammoniak, einem Monoamin oder einem Polyamin,
(iv) Umsetzung mit einem Boran zu einem Boratester und oxidative Spaltung des Boratesters zum 1,3-Diol,
(v) Umwandlung in einen Aldehyd,
(vi) Umwandlung in einen Aldehyd und Umwandlung des Aldehyds in ein Oxim und Reduktion des Oxims zum Amin,
(vii) Umwandlung in einen Aldehyd und Umwandlung des Aldehyds in ein Azomethinkation und Hydrolyse zum Amin,
(viii) Umwandlung in einen Aldehyd und Umwandlung des Aldehyds in einen Alkohol oder
(ix) Umwandlung in einen Aldehyd und Umwandlung des Aldehyds in eine Schiff'sche Base oder ein Enamin und Reduktion der Schiff'schen Base oder des Enamins zum Amin
erzeugt wurden;
(n) Gruppierungen, die durch Hydroborierung der Vinyliden-Doppelbindungen des POL zugrundeliegenden Polyisobutylens und nachfolgende Oxidation des primären Hydroborierungsproduktes erzeugt wurden; und
(o) Gruppierungen, die durch Hydrosilylierung der Vinyliden-Doppelbindungen des POL zugrundeliegenden Polyisobutylens erzeugt wurden.

10. Verfahren nach Anspruch 8 oder 9 zur Herstellung von Polyisobutylen-Derivaten der allgemeinen Formel I, in der A eine niedermolekulare polare Gruppe, welche eine Aminofunktion enthält, bedeutet, **dadurch gekennzeichnet, dass** man das Polyisobutylen gemäß den Ansprüchen 1 bis 4 mit einem geeignetem Katalysator in Gegenwart von Kohlenmonoxid und Wasserstoff hydroformyliert und anschließend in Gegenwart von mindestens n Äquivalenten Ammoniak oder eines Mono- oder Polyamins reduktiv aminiert.

11. Verfahren nach Anspruch 8 oder 9 zur Herstellung von Polyisobutylen-Derivaten der allgemeinen Formel I, in der A eine niedermolekulare polare Gruppe, welche eine Aminofunktion enthält, bedeutet, **dadurch gekennzeichnet, dass** man das Polyisobutylen gemäß den Ansprüchen 1 bis 4 mit einem geeignetem Aktivierungsmittel, insbesondere mit Chlor, behandelt und anschließend mit n Äquivalenten Ammoniak oder eines Mono- oder Polyamins umsetzt.

12. Verfahren nach Anspruch 8 oder 9 zur Herstellung von Polyisobutylen-Derivaten der allgemeinen Formel I, in der A eine niedermolekulare polare Gruppe, welche eine Aminofunktion enthält, bedeutet, **dadurch gekennzeichnet, dass** man das Polyisobutylen gemäß den Ansprüchen 1 bis 4 mit einer ethylenisch ungesättigten C₄- bis C₁₂-Dicarbonsäure oder einem reaktivem Derivat hiervon, insbesondere mit Maleinsäureanhydrid, thermisch oder halogenkatalysiert umsetzt und gegebenenfalls anschließend mit einem Mono- oder Polyamin in das entspechende Carbonsäure-amid- oder Carbonsäureimid-Derivat umwandelt, wobei das resultierende Carbonsäureamid- oder Carbonsäureimid-Derivat noch durch weitere Umsetzung mit mindestens einem C₂- bis C₁₂-Dicarbonsäureanhydrid, mit mindestens einem C₂-bis C₄-Alkylencarbonat und/oder mit Borsäure modifiziert werden kann.

13. Verfahren nach Anspruch 8 oder 9 zur Herstellung von Polyisobutylen-Derivaten der allgemeinen Formel I, in der A eine niedermolekulare polare Gruppe, welche eine Aminofunktion enthält, bedeutet, **dadurch gekennzeichnet, dass** man das Polyisobutylen gemäß den Ansprüchen 1 bis 4 mit einem Phenol in das entsprechende Alkylphenol umwandelt und dieses anschließend durch Umsetzung mit einem Aldehyd und einem primären oder sekundären Amin in das entsprechende Mannich-Addukt überführt.

## Claims

1. A polyisobutylene having a total content of vinylidene double bonds of more than 50 mol% and a number-average molecular weight (Mₙ) of 500 to 10 000 daltons, where at least 10% of all the vinylidene double bonds in the polyisobutylene are part of one or more side chains composed of at least 2 carbon atoms from the main polyisobutylene chain.

2. The polyisobutylene according to claim 1 having a total content of vinylidene double bonds of more than 70 mol% and a number-average molecular weight (Mₙ) of 900 to 2500 daltons, where at least 12% of all the vinylidene double bonds in the polyisobutylene are part of one or more side chains composed of at least 2 carbon atoms from the main polyisobutylene chain.

3. The polyisobutylene according to claim 1 or 2, in which the vinylidene double bonds which are part of one or more side chains composed of at least 2 carbon atoms from the main polyisobutylene chain are each arranged in the α position at the distal end of the side chains.

4. The polyisobutylene according to claims 1 to 3 having a polydispersity of 1.05 to 2.0.

5. A process for preparing a polyisobutylene according to claims 1 to 4, which comprises polymerizing, in a polymerization apparatus, isobutene or an isobutene-containing C₄ hydrocarbon mixture in the presence of a mixture of essentially isobutene oligomers composed of 2 to 5 isobutene units at temperatures of -100°C to +100°C by means of a Brønsted acid-based or Lewis acid-based polymerization catalyst, where the molar ratio of the vinylidene double bonds present in the isobutene oligomer mixture present in the polymerization medium to the double bonds in the isobutene monomer used is at least 1:100.

6. The process for preparing a polyisobutylene according to claim 5, wherein the mixture consisting of essentially isobutene oligomers composed of 2 to 5 isobutene units is prepared separately and introduced into the polymerization medium before or during the polymerization of the isobutene or of the isobutene-containing C₄ hydrocarbon mixture.

7. The use of a polyisobutylene according to claims 1 to 4 for preparation of derivatives suitable as fuel and lubricant additives.

8. A process for preparing polyisobutylene derivatives of the general formula I
POL(-A)ₙ (I)
in which
POL denotes the n-functional radical of a polyisobutylene according to claims 1 to 4,
A is a low molecular weight polar group comprising in each case one or more amino functions and/or nitro groups and/or hydroxyl groups and/or mercaptan groups and/or carboxylic acid or carboxylic acid derivative functions, especially succinic anhydride or succinic acid derivative functions, and/or sulfonic acid or sulfonic acid derivative functions and/or aldehyde functions and/or silyl groups, and
the variable n is a number from 1 to 10, where the variables A may be the same or different when n > 1,
which comprises reacting the polyisobutylene according to claims 1 to 4 with at least n equivalents of a compound which introduces the low molecular weight polar group A or a substructure of the low molecular weight polar group A and, in the case of reaction with a substructure, completing the formation of the low molecular weight polar group A by further reactions.

9. The process according to claim 8 for preparing polyisobutylene derivatives of the general formula I, in which the low molecular weight polar group A is selected from
(a) mono- or polyamino groups having up to 6 nitrogen atoms, where at least one nitrogen atom has basic properties;
(b) nitro groups, optionally in combination with hydroxyl groups;
(c) hydroxyl groups, optionally in combination with mono- or polyamino groups, where at least one nitrogen atom has basic properties;
(d) carboxyl groups or the alkali metal or alkaline earth metal salts thereof;
(e) sulfo groups or the alkali metal or alkaline earth metal salts thereof;
(f) polyoxy-C₂-C₄-alkylene moieties terminated by hydroxyl groups, by mono- or polyamino groups, where at least one nitrogen atom has basic properties,or by carbamate groups;
(g) carboxylic ester groups;
(h) succinic anhydride or moieties which derive from succinic anhydride and have hydroxyl and/or amino and/or quaternized amino and/or amido and/or imido groups, which have been prepared by thermal or halogen- catalyzed maleation of the internal double bonds and of the vinylidene double bonds of the parent polyisobutylene of the POL with maleic anhydride and, in the case of moieties which derive from succinic anhydride and have hydroxyl and/or amino and/or quaternized amino and/or amido and/or imido groups, by appropriate further reactions, and any resulting carboxamide or carboximide derivative can be modified by further conversion with at least one C₂- to C₁₂-dicarboxylic anhydride, with at least one C₂- to C₄-alkylene carbonate and/or with boric acid;
(i) moieties obtained by Mannich reaction of POL-substituted phenols with aldehydes and mono- or polyamines;
(j) phenol, alkylphenol or (hydroxyalkyl)phenol moieties;
(k) hydroxymethyl groups;
(l) moieties which have been obtained by epoxidation of the vinylidene double bonds of the parent polyisobutylene of the POL and subsequent
(i) hydrolysis to the 1,2-diol,
(ii) reaction with a thiol or a polythiol,
(iii) reaction with ammonia, a monoamine or a polyamine,
(iv) reaction with a borane to give a borate ester and oxidative cleavage of the borate ester to the 1,3-diol,
(v) conversion to an aldehyde,
(vi) conversion to an aldehyde and conversion of the aldehyde to an oxime and reduction of the oxime to the amine,
(vii) conversion to an aldehyde and conversion of the aldehyde to an azomethine cation and hydrolysis to the amine,
(viii) conversion to an aldehyde and conversion of the aldehyde to an alcohol or
(ix) conversion to an aldehyde and conversion of the aldehyde to a Schiff base or an enamine and reduction of the Schiff base or of the enamine to the amine;
(n) moieties which have been obtained by hydroboration of vinylidene double bonds of the parent polyisobutylene of the POL and subsequent oxidation of the primary hydroboration product; and
(o) moieties which have been obtained by hydrosilylation of vinylidene double bonds of the parent polyisobutylene of the POL.

10. The process according to claim 8 or 9 for the preparation of polyisobutylene derivatives of the general formula I in which A is a low molecular weight polar group comprising an amino function, wherein the polyisobutylene according to claims 1 to 4 is hydroformylated with a suitable catalyst in the presence of carbon monoxide and hydrogen and then reductively aminated in the presence of at least n equivalents of ammonia or of a mono- or polyamine.

11. The process according to claim 8 or 9 for the preparation of polyisobutylene derivatives of the general formula I in which A is a low molecular weight polar group comprising an amino function, wherein the polyisobutylene according to claims 1 to 4 is treated with a suitable activator, especially with chlorine, and then reacted with n equivalents of ammonia or of a mono- or polyamine.

12. The process according to claim 8 or 9 for the preparation of polyisobutylene derivatives of the general formula I in which A is a low molecular weight polar group comprising an amino function, wherein the polyisobutylene according to claims 1 to 4 is reacted with an ethylenically unsaturated C₄- to C₁₂-dicarboxylic acid or a reactive derivative thereof, especially with maleic anhydride, thermally or with halogen catalysis and then optionally converting it with a mono- or polyamine to the corresponding carboxamide or carboximide derivative, and the resulting carboxamide or carboximide derivative can be modified by further reaction with at least one C₂-to C₁₂-dicarboxylic anhydride, with at least one C₂-to C₄-alkylene carbonate and/or with boric acid.

13. The process according to claim 8 or 9 for the preparation of polyisobutylene derivatives of the general formula I in which A is a low molecular weight polar group comprising an amino function, wherein the polyisobutylene according to claims 1 to 4 is converted with a phenol to the corresponding alkylphenol and the latter is subsequently converted by reaction with an aldehyde and a primary or secondary amine to the corresponding Mannich adduct.

## Revendications

1. Polyisobutylène ayant une teneur totale en doubles liaisons vinylidène de plus de 50 % en moles et un poids moléculaire moyen en nombre (Mₙ) de 500 à 10 000 Daltons, au moins 10 % de toutes les doubles liaisons vinylidène du polyisobutylène faisant partie d'une ou de plusieurs chaînes latérales constituées d'au moins 2 atomes de carbone sur la chaîne principale polyisobutylène.

2. Polyisobutylène selon la revendication 1, ayant une teneur totale en doubles liaisons vinylidène de plus de 70 % en moles et un poids moléculaire moyen en nombre (Mₙ) de 900 à 2 500 Daltons, au moins 12 % de toutes les doubles liaisons vinylidène du polyisobutylène faisant partie d'une ou de plusieurs chaînes latérales constituées d'au moins 2 atomes de carbone sur la chaîne principale polyisobutylène.

3. Polyisobutylène selon la revendication 1 ou 2, dans lequel les doubles liaisons vinylidène qui font partie d'une ou de plusieurs chaînes latérales constituées d'au moins 2 atomes de carbone sur la chaîne principale polyisobutylène sont à chaque fois agencées en position α par rapport à l'extrémité distale des chaînes latérales.

4. Polyisobutylène selon les revendications 1 à 3, ayant une polydispersité de 1,05 à 2,0.

5. Procédé de fabrication d'un polyisobutylène selon les revendications 1 à 4, **caractérisé en ce que** de l'isobutène ou un mélange d'hydrocarbures en C₄ contenant de l'isobutène est polymérisé dans un appareil de polymérisation en présence d'un mélange principalement d'oligomères d'isobutène constitués de 2 à 5 unités isobutène à des températures de -100 °C à +100 °C au moyen d'un catalyseur de polymérisation à base d'un acide de Bronsted ou d'un acide de Lewis, le rapport en moles entre les doubles liaisons vinylidène contenues dans le mélange d'oligomères d'isobutène présent dans le milieu de polymérisation et les doubles liaisons du monomère isobutène utilisé étant d'au moins 1:100.

6. Procédé de fabrication d'un polyisobutylène selon la revendication 5, **caractérisé en ce que** le mélange principalement d'oligomères d'isobutène constitués de 2 à 5 unités isobutène est fabriqué séparément et introduit avant ou pendant la polymérisation de l'isobutène ou du mélange d'hydrocarbures en C₄ contenant de l'isobutène dans le milieu de polymérisation.

7. Utilisation d'un polyisobutylène selon les revendications 1 à 4 pour la fabrication de dérivés de celui-ci appropriés en tant qu'additifs de carburants et de lubrifiants.

8. Procédé de fabrication de dérivés de polyisobutylène de formule générale I
POL(-A)ₙ (I)
dans laquelle
POL désigne le radical n-fonctionnel d'un polyisobutylène selon les revendications 1 à 4,
A signifie un groupe polaire de faible poids moléculaire, qui contient à chaque fois une ou plusieurs fonctions amino et/ou groupes amino et/ou groupes hydroxyle et/ou groupes mercaptan et/ou fonctions acide carboxylique ou dérivé d'acide carboxylique, notamment fonctions anhydride d'acide succinique ou dérivé d'acide succinique, et/ou fonctions acide sulfonique ou dérivé d'acide sulfonique, et/ou fonctions aldéhyde et/ou groupes silyle, et
la variable n représente un nombre de 1 à 10, les variables A pouvant être identiques ou différentes lorsque n > 1,
**caractérisé en ce que** le polyisobutylène selon les revendications 1 à 4 est mis en réaction avec au moins n équivalents d'un composé introduisant le groupe polaire de faible poids moléculaire A ou une structure partielle du groupe polaire de faible poids moléculaire A et, en cas de réaction avec une structure partielle, la formation du groupe polaire de faible poids moléculaire A est complétée par des réactions ultérieures.

9. Procédé selon la revendication 8 pour la fabrication de dérivés de polyisobutylène de formule générale I, dans lesquels le groupe polaire de faible poids moléculaire A est choisi parmi
(a) les groupes mono- ou polyamino contenant jusqu'à 6 atomes d'azote, au moins un atome d'azote ayant des propriétés basiques ;
(b) les groupes nitro, éventuellement en combinaison avec des groupes hydroxyle ;
(c) les groupes hydroxyle, éventuellement en combinaison avec des groupes mono- ou polyamino, au moins un atome d'azote ayant des propriétés basiques ;
(d) les groupes carboxyle ou leurs sels de métaux alcalins ou de métaux alcalino-terreux ;
(e) les groupes acide sulfonique ou leurs sels de métaux alcalins ou de métaux alcalino-terreux ;
(f) les groupes polyoxy-alkylène en C₂-C₄, qui sont terminés par des groupes hydroxyle, des groupes mono- ou polyamino, au moins un atome d'azote ayant des propriétés basiques, ou par des groupes carbamate ;
(g) les groupes esters d'acides carboxyliques ;
(h) les groupes anhydride de l'acide succinique ou dérivés d'anhydride de l'acide succinique contenant des groupes hydroxy et/ou amino et/ou amino quaternisé et/ou amido et/ou imido, qui ont été fabriqués par maléinisation thermique ou catalysée par un halogène des doubles liaisons intérieures et des doubles liaisons vinylidène du polyisobutylène sous-jacent à POL avec de l'anhydride de l'acide maléique et, dans le cas de groupes dérivés d'anhydride de l'acide succinique contenant des groupes hydroxy et/ou amino et/ou amino quaternisé et/ou amido et/ou imido, par des réactions ultérieures appropriées, un dérivé d'amide d'acide carboxylique ou d'imide d'acide carboxylique résultant pouvant encore être modifié par réaction supplémentaire avec au moins un anhydride d'acide dicarboxylique en C₂ à C₁₂, avec au moins un carbonate d'alkylène en C₂ à C₄ et/ou avec de l'acide borique ;
(j) les groupes formés par réaction de Mannich de phénols substitués avec POL avec des aldéhydes et des mono- ou polyamines ;
(k) les groupes phénol, alkylphénol ou (hydroxyalkyl)-phénol ;
(l) les groupes hydroxyméthyle ;
(m) les groupes formés par époxydation des doubles liaisons vinylidène du polyisobutylène sous-jacent à POL, puis
(i) hydrolyse en 1,2-diol,
(ii) réaction avec un thiol ou un polythiol,
(iii) réaction avec de l'ammoniac, une monoamine ou une polyamine,
(iv) réaction avec un borane pour former un ester de borate et clivage oxydatif de l'ester de borate pour former le 1,3-diol,
(v) transformation en un aldéhyde,
(vi) transformation en un aldéhyde et transformation de l'aldéhyde en un oxime et réduction de l'oxime en l'amine,
(vii) transformation en un aldéhyde et transformation de l'aldéhyde en un cation azométhine et hydrolyse en l'amine,
(viii) transformation en un aldéhyde et transformation de l'aldéhyde en un alcool, ou
(ix) transformation en un aldéhyde et transformation de l'aldéhyde en une base de Schiff ou une énamine et réduction de la base de Schiff ou de l'énamine en l'amine ;
(n) les groupes qui ont été formés par hydroboration des doubles liaisons vinylidène du polyisobutylène sous-jacent à POL et oxydation ultérieure du produit d'hydroboration primaire ; et
(o) les groupes qui ont été formés par hydrosilylation des doubles liaisons vinylidène du polyisobutylène sous-jacent à POL.

10. Procédé selon la revendication 8 ou 9 pour la fabrication de dérivés de polyisobutylène de formule générale I, dans lesquels A signifie un groupe polaire de faible poids moléculaire, qui contient une fonction amino, **caractérisé en ce que** le polyisobutylène selon les revendications 1 à 4 est hydroformylé avec un catalyseur approprié en présence de monoxyde de carbone et d'hydrogène, puis aminé par réduction en présence d'au moins n équivalents d'ammoniac ou d'une mono- ou polyamine.

11. Procédé selon la revendication 8 ou 9 pour la fabrication de dérivés de polyisobutylène de formule général I, dans lesquels A signifie un groupe polaire de faible poids moléculaire, qui contient une fonction amino, **caractérisé en ce que** le polyisobutylène selon les revendications 1 à 4 est traité avec un agent d'activation approprié, notamment avec du chlore, puis mis en réaction avec n équivalents d'ammoniac ou d'une mono- ou polyamine.

12. Procédé selon la revendication 8 ou 9 pour la fabrication de dérivés de polyisobutylène de formule général I, dans lesquels A signifie un groupe polaire de faible poids moléculaire, qui contient une fonction amino, **caractérisé en ce que** le polyisobutylène selon les revendications 1 à 4 est mis en réaction thermiquement ou sous catalyse avec un halogène avec un acide dicarboxylique en C₄ à C₁₂ éthyléniquement insaturé ou un dérivé réactif de celui-ci, notamment avec l'anhydride de l'acide maléique, puis éventuellement transformé avec une mono- ou polyamine en le dérivé d'amide d'acide carboxylique ou d'imide d'acide carboxylique correspondant, le dérivé d'amide d'acide carboxylique ou d'imide d'acide carboxylique résultant pouvant encore être modifié par réaction supplémentaire avec au moins un anhydride d'acide dicarboxylique en C₂ à C₁₂, avec au moins un carbonate d'alkylène en C₂ à C₄ et/ou avec de l'acide borique.

13. Procédé selon la revendication 8 ou 9 pour la fabrication de dérivés de polyisobutylène de formule général I, dans lesquels A signifie un groupe polaire de faible poids moléculaire, qui contient une fonction amino, **caractérisé en ce que** le polyisobutylène selon les revendications 1 à 4 est transformé avec un phénol en l'alkylphénol correspondant, puis celui-ci est transformé par réaction avec un aldéhyde et une amine primaire ou secondaire en l'adduit de Mannich correspondant.
